**Europäisches Patentamt**

**European Patent Office**

**Office européen des brevets**

(19)

(11) Veröffentlichungsnummer: **0 023 979**
**B1**

# (12) EUROPÄISCHE PATENTSCHRIFT

(45) Veröffentlichungstag der Patentschrift:
**21.09.83**

(21) Anmeldenummer: **80104061.9**

(22) Anmeldetag: **14.07.80**

(51) Int. Cl.³: **C 08 G 63/48,** C 08 G 63/20,
C 08 G 63/76, C 09 D 3/64

(54) **Wasserlösliche, lufttrocknende Alkydharze, Verfahren zu ihrer Herstellung und ihre Verwendung als Grundlage für vergilbungsarme Lacke.**

(30) Priorität: **28.07.79 DE 2930734**

(43) Veröffentlichungstag der Anmeldung:
**18.02.81 Patentblatt 81/7**

(45) Bekanntmachung des Hinweises auf die Patenterteilung:
**21.09.83 Patentblatt 83/38**

(84) Benannte Vertragsstaaten:
**AT DE FR GB IT NL SE**

(56) Entgegenhaltungen:
**DE-A-2 059 352**
**DE-A-2 304 550**
**DE-A-2 637 167**

(73) Patentinhaber: **BAYER AG, Zentralbereich Patente,
Marken und Lizenzen, D-5090 Leverkusen 1, Bayerwerk
(DE)**

(72) Erfinder: **Dhein, Rolf, Dr., Deswatinesstrasse 30,
D-4150 Krefeld 1 (DE)**
Erfinder: **Schoeps, Jochem, Dr.,
Windmuehlenstrasse 126, D-4150 Krefeld 1 (DE)**
Erfinder: **Küchenmeister, Rolf, Dr., Dreikönigen
Strasse 119, D-4150 Krefeld 1 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Wasserlösliche, lufttrocknende Alkydharze, Verfahren zu ihrer Herstellung und ihre Verwendung als
Grundlage für vergilbungsarme Lacke

Die Erfindung betrifft Alkydharze, die Reste von Fettsäuren mit konjugierten Doppelbindungen enthalten und deren Carboxylgruppen mindestens teilweise neutralisiert sind, ein Verfahren zur Herstellung dieser Alkydharze und ihre Verwendung als Grundlage für vergilbungsarme Lacke.

Wässrige Einbrennlacke auf der Grundlage von Aminsalzen von Halbestern hydroxylgruppenhaltiger, fettsäuremodifizierter Alkydharze sind bekannt (DE-AS 1 519 146). Die wasserunlöslichen Alkydharze werden nach dieser Druckschrift mit Tetrahydrophthalsäureanhydrid umgesetzt, und die so erhaltenen Halbester werden neutralisiert. Dabei kommt der Auswahl des Tetrahydrophthalsäureanhydrids für den erreichbaren Glanz eine entscheidende Bedeutung zu, da nach Sp. 1, Z. 53–59 der DE-AS 1 519 146 die mit Phthalsäureanhydrid, Maleinsäureanhydrid, Hexahydrophthalsäureanhydrid, Trimellithsäureanhydrid oder Bernsteinsäureanhydrid erhaltenen Umsetzungsprodukte matte bis mässig glänzende Lackierungen liefern.

Von nichtwässrigen Lacksystemen ist bekannt, dass der Einbau ungesättigter Fettsäuren mit konjugierten Doppelbindungen zu guten Trocknungseigenschaften führt (DE-OS 2 742 584). Allerdings weiss man auch, dass Amine Verfärbungen von Lackierungen auf Basis oxidativ trocknender Lacke fördern [R. Dhein, Farbe und Lacke 84, 680–684 (1978)]. Anderseits führten Versuche, die Amine durch Alkali zu ersetzen, zu einer deutlich verzögerten Trocknung (Paint Manufacture, Vol 36, No. 5, S. 49, Mai 1966).

Überraschenderweise wurde nun gefunden, dass Alkydharze, die trocknende Fettsäuren mit konjugierten Doppelbindungen einkondensiert enthalten und als mit Ammoniak oder Aminen neutralisierte Halbester von Hexahydrophthalsäureanhydrid vorliegen, eine hervorragende Basis für Lackierungen bilden, die kaum vergilben und auch bei Wärmealterung eine bislang von Amin-neutralisierten, mit ungesättigten Fettsäuremodifizierten Alkydharzen unbekannte Farbkonstanz zeigen.

Der Ausdruck «Amine» schliesst im folgenden Ammoniak ein.

Gegenstand der Erfindung sind also wasserlösliche, lufttrocknende Amin-neutralisierte Alkydharze mit Fettsäuregehalten von 20–60% aus Dicarbonsäure bzw. deren esterbildenden Derivaten, mehrwertigen Alkoholen, Fettsäuren, Halbester-bildenden Dicarbonsäureanhydriden, gegebenenfalls Monocarbonsäuren und/oder einwertigen Alkoholen, dadurch gekennzeichnet, dass die Fettsäuren zu 10–80, vorzugsweise 25–40 Gew.-%, aus Fettsäuren mit konjugierten Doppelbindungen bestehen und das Halbester-bildende Dicarbonsäureanhydrid Hexahydrophthalsäureanhydrid ist.

«Wasserlöslich» im Sinne der Erfindung bedeutet, dass in Lösungsmitteln, die zum überwiegenden Teil aus Wasser bestehen, das Alkydharz nicht ausfällt, sondern eine transparente oder nicht-transparente «Lösung» entsteht; die Mitverwendung sog. Lösungsvermittler wird durch den Ausdruck «wasserlöslich» nicht ausgeschlossen.

Die Fettsäuregehalte werden als Triglycerid, bezogen auf nicht neutralisierten Alkydharz-Halbester, berechnet; die Dimension ist Gew.-%.

Im folgenden werden unter «Alkydharzen» fettsäure- oder ölmodifizierte Polyester verstanden. Unter Polyestern versteht man aus Alkoholen und Carbonsäuren hergestellte Polykondensate der Art, wie sie z.B. in Römpp's Chemielexikon, Bd. 1, S. 202, Frankh'sche Verlagsbuchhandlung, Stuttgart 1966, definiert oder bei D.H. Solomon, The Chemistry of Organic Filmformers, S. 75–101, John Wiley & Sons, Inc., New York 1967, beschrieben sind.

Für die Synthese der Alkydharze bevorzugte Alkohole sind aliphatische, cycloaliphatische und/oder araliphatische Alkohole mit 1–6, vorzugsweise 1–4, an nicht-aromatische C-Atome gebundenen OH-Gruppen und 1–24 C-Atomen pro Molekül, z.B. Glykole wie Ethylenglykol, Propylenglykol, Butandiole, Neopentylglykol, Etheralkohole wie Di- und Triethylenglykole oder Bis-(trimethylolpropan); drei- und höherwertige Alkohole wie Glycerin, Trimethylolethan und -propan, Pentaerythrit, Dipentaerythrit, Tripentaerythrit; Zuckeralkohole wie Mannit und Sorbit; einwertige, kettenabbrechende Alkohole wie Propanol, Butanol, Cyclohexanol und Benzylalkohol. Die Auswahl der Alkoholkomponenten richtet sich u.a. nach dem gewünschten Gehalt freier Hydroxylgruppen im Alkydharz, nach der Menge eingesetzter Monocarbonsäuren, nach gewünschten Kriterien wie Löslichkeit und Verdünnbarkeit der Alkydharze. Der bevorzugte mehrwertige Alkohol ist Pentaerythrit.

Für die Herstellung der Alkydharze bevorzugte Säurekomponenten sind aliphatische, cycloaliphatische und/oder aromatische mehrbasische Carbonsäuren, vorzugsweise Di-, Tri- und Tetracarbonsäuren, mit 4–12 C-Atomen pro Molekül oder deren veresterungsfähige Derivate (z.B. Anhydride oder Ester), z.B. Phthalsäureanhydrid, Iso- und Terephthalsäure, Tetra- und Hexahydrophthalsäureanhydrid, Trimellithsäureanhydrid, Pyromellithsäureanhydrid, Maleinsäureanhydrid, Adipinsäure und Bernsteinsäureanhydrid, die höheren und niederen Homologen sowie die alkylsubstituierten Derivate der Adipinsäure. Die bevorzugtesten mehrbasischen Carbonsäurekomponenten sind Isophthalsäure und Phthalsäureanhydrid.

Für die Herstellung der Fettsäuregemische, die als Ausgangsprodukte für die erfindungsgemässen Alkydharze dienen sollen, sind geeignete Verfahren bekannt, z.B. die katalytische Isomerisierung natürlicher Fettsäuregemische, gegebenenfalls in Form ihrer Methylester.

Dabei wählt man die Fettsäuregemische vorteilhafterweise so aus, dass sie – unter Berücksichtigung des erreichbaren Isomerisierungsgrades – bereits vor der Isomerisierung den für die Herstellung der erfindungsgemässen Alkydharze erforderlichen Anteil einfach ungesättigter und gesättigter Carbonsäuren aufweisen. Als bevorzugte Fettsäuregemische sind jene zu nennen, die aus Soja-, Sonnenblumen-, Safflor-, Erdnuss-, Baumwollsaat-, Raps-, Mais-, Olivenöl, aber auch bestimmten – evtl. vorbehandelten – tierischen Ölen und Fetten gewonnen werden können.

Es ist gegebenenfalls auch möglich, an Stelle der konjugierten Fettsäuren die entsprechenden konjugierten Öle einzusetzen.

Auch durch Dehydratisierung von Ricinusölfettsäuren – gegebenenfalls in Kombination mit Isomerisierung, Destillation oder anderen Aufarbeitungsverfahren – herstellbare Fettsäuregemische sind bevorzugte Ausgangsmaterialien für die Herstellung der erfindungsgemässen Alkydharze. Je nach Zusammensetzung der Fettsäuregemische kann es auch erforderlich sein, weitere Fettsäuregemische (evtl. auch solche, die keine konjugierten Fettsäuren enthalten) oder reine synthetische Fettsäuren, wie z.B. α-Ethylhexansäure oder Isononansäure, zuzusetzen, um die erfindungsgemäss notwendige Zusammensetzung zu erhalten.

Die Fettsäuregehalte der Alkydharze richten sich nach dem geplanten Anwendungssektor. Für besonders schnell trocknende Beschichtungen werden Fettsäuregehalte von 20–40% bevorzugt. Für besonders gut verlaufende Beschichtungen können die Fettsäuregehalte 40–60% betragen.

Neben trocknenden Fettsäuren können auch gesättigte Fettsäuren, wie z.B. Cocosfettsäuren, eingesetzt werden. Bevorzugte aromatische Carbonsäuren, die zur Steigung der Härte in Mengen von 5–15 Gew.-%, bezogen auf das Alkydharz nach der Halbesterbildung, eingesetzt werden können, sind Benzoesäure, Alkylbenzoesäuren mit 1–4 C-Atomen pro Alkylrest, wie z.B. p-tert.-Butylbenzoesäure, Chlorbenzoesäuren und Hexahydrobenzoesäure.

Die Herstellung der Alkydharz-Halbester kann auf an sich bekannte Weise derart erfolgen, dass das Hydroxylgruppen-haltige Alkydharz bei erhöhter Temperatur, vorzugsweise bei 100–160°C, solange mit dem Dicarbonsäureanhydrid umgesetzt wird, bis die Säurezahl das Ende der Halbesterbildung anzeigt. Die Alkydharze besitzen vor der Halbesterbildung im allgemeinen Säurezahlen unter 20, vorzugsweise unter 10, und Hydroxylzahlen von 50 bis 250. Die Alkydharz-Halbester haben dagegen in der Regel Säurezahlen von 30–70, vorzugsweise von 35–50. Das als Zahlenmittel $\bar{M}_n$ bestimmte Molekulargewicht der nichtneutralisierten Alkydharz-Halbester beträgt 200 bis 10 000 (bis zu Molekulargewichten von 5000 dampfdruckosmometrisch, bei Molekulargewichten über 5000 membranosmometrisch – jeweils in Xylol gelöst – bestimmt). Für die Herstellung wässriger Lösungen können die Alkydharz-Halbester in wassermischbaren organischen Lösungsvermittlern, wie etwa in Ethylenglykolmonoalkylethern, z.B. Ethylenglykolmonomethyl-, -ethyl- und -butylether, in Alkoholen, Estern, Ketonen, Ketoalkoholen und niederen Estern vorgelöst werden. Der Anteil an Lösungsvermittler, bezogen auf den fertigen Lack, liegt meistens bei 5 bis 30 Gew.-%. Eventuell kann man aber auf Lösungsvermittler auch ganz verzichten. Der Wassergehalt, bezogen auf die Summe Lösungsvermittler + Wasser im fertigen Lack, beträgt in der Regel 50 bis 95 Gew.-%.

Als bevorzugte Neutralisationsmittel sind Ammoniak, primäre, sekundäre und tertiäre Amine wie Ethylamin, Di- und Triethylamin, Mono-, Di- und Triethanolamin, Dimethylethanolamin und Dimethylaminopropanol zu nennen. Die Menge der Amine richtet sich nach der Säurezahl: Bei niedrigen Säurezahlen sollte der Neutralisationsgrad 100% betragen; bei höheren Säurezahlen kann in vielen Fällen bereits mit einem Neutralisationsgrad von 70–90% eine ausreichende Wasserlöslichkeit erhalten werden.

Zur Herstellung der Lacke können – wie üblich – Hilfsmittel, Sikkative, Füllstoffe, Pigmente usw. zugesetzt werden. Es ist empfehlenswert, bereits den Lieferformen Hautverhinderungsmittel zuzusetzen.

Auch weitere Harze, wie Melaminharze oder andere vernetzende Aminoplasten (vgl. FR 943 411; D.H. Solomon, The Chemistry of Organic Filmformers, 235–240, John Wiley & Sons Inc., New York 1967; «Methoden der Organischen Chemie» (Houben-Weyl), Bd. 14/2, Teil 2, 4. Aufl., Georg Thieme Verlag, Stuttgart 1963, S. 319 ff.), können zugemischt werden. Man erhält dann Lacke, die bei kurzzeitiger Erwärmung sowohl oxidativ trocknen als auch gleichzeitig durch das Aminoplastharz vernetzt werden.

Weiterer Gegenstand der Erfindung ist ein Verfahren zur Herstellung wasserlöslicher, lufttrocknender Amin-neutralisierter Alkydharze mit Fettsäuregehalten von 20–60%, dadurch gekennzeichnet, dass man ein Alkydharz aus Dicarbonsäuren bzw. ihren esterbildenden Derivaten, mehrwertigen Alkoholen und Fettsäuren, wobei die Fettsäuren 10–80 Gew.-% Fettsäuren mit konjugierten Doppelbindungen enthalten, mit Säurezahlen von unter 20 und Hydroxylzahlen von 50 bis 250 mit Hexahydrophthalsäureanhydrid bei erhöhter Temperatur, vorzugsweise bei 100–160°C, bis zum Erreichen einer Säurezahl von 30–70 umsetzt, den erhaltenen Halbester gegebenenfalls in einem Lösungsvermittler verlöst und mit Ammoniak oder Aminen mindestens teilweise neutralisiert.

Ein weiterer Gegenstand der Erfindung ist die Verwendung dieser neutralisierten Alkydharz-Halbester als Grundlage für wässrige vergilbungsarme Lacke. Diese können insbesondere dort mit Vorteil eingesetzt werden, wo Lackierungen einer Wärmealterung ausgesetzt sind, z.B. bei Heizkörpern und Heizungsrohren.

Besonders bevorzugte erfindungsgemässe Alkydharze enthalten als mehrwertige Alkoholreste Pentaerythritreste, als Dicarbonsäurereste Iso-

phthalsäure- oder Phthalsäurereste, als konjugierte Fettsäurereste die Reste konjugierter Sojaölfettsäure mit 29–33, vorzugsweise ca. 31 Gew.-% Ölsäure, 46–55, vorzugsweise ca. 51 Gew.-% Linolsäuren, und 8–12, vorzugsweise ca. 10 Gew.-% Linolensäuren, wobei die Linol- und Linolensäuren zu 42–48% konjugiert sind, und besitzen Fettsäuregehalte von 32–38 Gew.-%, einen Gehalt einkondensierter Benzoesäuren von 10–14 Gew.-%, Säurezahlen des nichtneutralisierten Halbesters von 38–44 und Hydroxyzahlen von 70–100.

Die in den folgenden Beispielen genannten Teile sind Gewichtsteile; Prozentangaben bedeuten Gewichtsprozente.

Beispiel 1

Aus 1360 Teilen Pentaerythrit, 1808 Teilen einer konjugierten Sojafettsäure mit einem Konjugationsgrad der 2- und mehrfach ungesättigten Fettsäureanteile von 51%, 427 Teilen Benzoesäure und 1078 Teilen Isophthalsäure wird unter Stickstoffatmosphäre bei 220°C ein Alkydharz mit einer Säurezahl von 5,5 und einer Viskosität entsprechend einer Auslaufzeit von 33 sec. (gemessen 60%ig in Dimethylformamid nach DIN 53 211, DIN-Becher 4) hergestellt. 3463 Teile dieses Alkydharzes werden mit 638 Teilen Hexahydrophthalsäureanhydrid umgesetzt und bei 140°C zum Alkydharzhalbester einer Säurezahl von 41 und einer Viskosität entsprechend einer Auslaufzeit von 145 sec (DIN 53 211, DIN-Becher 4, 50%ig in Dimethylformamid) umgesetzt. Dieses Alkydharz mit einem Fettsäuregehalt von 36%, einem Benzoesäuregehalt von 8,5% und einer Hydroxylzahl von 150 wird 63%ig in Ethylenglykolmonoethylether gelöst.

Aus dieser Lösung wird ein wässriger Lack hergestellt, indem die obige Lieferform mit weiterem Ethylenglykolmonoethylether auf 60% eingestellt und die sauren Gruppen mit Triethylamin neutralisiert werden. Die Lackrezeptur für dieses und die folgenden Beispiele hat folgende Zusammensetzung:

| | |
|---|---|
| Alkydharz, 60%ig, neutralisiert | 31,00 Gew.-% |
| Titandioxid, Rutil-Typ | 17,50 Gew.-% |
| Kobalt-Sikkativ, 6% flüssig | 0,10 Gew.-% |
| Antihautmittel, oximisch | 0,30 Gew.-% |
| Wasser, deionisiert | 51,10 Gew.-% |
| | 100,00 Gew.-% |

Dieser Weisslack hat eine Trocknungszeit von 1 Stunde bis zur Klebfreiheit, ist nach 24 Stunden vollständig durchgetrocknet und hat dann eine Pendelhärte von 32 sec (nach König), einen Glanzwert (nach Gardner, 20° Messwinkel) von 80, einen Anfangsweissgrad (nach Berger) von 84,2, nach 5 Tagen Lagerung bei 50°C immer noch einen Wert von 71,6, nach 17 Stunden bei 130°C noch einen Weisstonwert von 45,3 und einen Glanzwert (nach Gardner, 20° Messwinkel) von 50 bei ebenfalls guten Werten in Wasserfestigkeit (nach DIN 53 209) von m 4/g 2.

Der folgende Vergleich zeigt ein weiteres Beispiel und die überraschenden lacktechnischen Vorteile der erfindungsgemässen Alkydharze im Vergleich zu Bindemitteln, die nicht der erfindungsgemässen Kombination entsprechen, wobei die Herstellung der im Beispiel 1 angegebenen Fahrweise entspricht und die erfindungsgemässen Rohstoffe durch äquivalente Anteile nicht erfindungsgemässer Rohstoffe ersetzt werden.

Beispiel 2

Ein Alkydharz entsprechend Beispiel 1, jedoch aus 1214 Teilen Phthalsäureanhydrid anstelle von Isophthalsäure hergestellt und wie dort mit Hexahydrophthalsäureanhydrid umgesetzt, hat eine Säurezahl von 43 und eine Viskosität entsprechend einer Auslaufzeit von 173 sec (50%ig in Dimethylformamid, DIN 53 211, DIN-Becher 4).

Vergleichsversuche

a) mit natürlicher Sojaölfettsäure anstelle der konjugierten Sojaölfettsäure
b) mit Tetrahydrophthalsäureanhydrid anstelle von Hexahydrophthalsäureanhydrid
c) mit Phthalsäureanhydrid anstelle von Hexahydrophthalsäureanhydrid
d) mit Bernsteinsäureanhydrid anstelle von Hexahydrophthalsäureanhydrid
e) mit Maleinsäureanhydrid anstelle von Hexahydrophthalsäureanhydrid.

Der Vergleich e) wurde lacktechnisch nicht geprüft, weil bereits bei der Lackherstellung eine starke Gelbildung einsetzte.

Die folgende Tabelle gibt den Überblick über die lacktechnischen Vorteile der erfindungsgemässen Systeme.

| | a | b | c | d | Beispiel 2 |
|---|---|---|---|---|---|
| SZ, 100%iges Harz | 40,2 | 43,1 | 47,7 | 43,7 | 43,8 |
| Visk. Lff. mPa. s | 8673 | 7553 | 9694 | 6580 | 8674 |
| neutralisiert mit | TEA | TEA | TEA | TEA | TEA |
| pH-Wert | 9,75 | 9,55 | 8,95 | 8,95 | 9,55 |
| staubtrocken bei 20°C/42% LF nach (h) | ½ | ¾ | ¾ | ¾ | ¾ |
| klebfrei bei 20°C/42% LF nach (h) | 1¼ | 1¼ | 1¼ | 1¼ | 1¼ |
| Glanz (Gardner, 20°) Anfang; 5 Tagen/ 50°C; 17 h/130°C | 83–81–43 | 80–77–56 | 80–67–28 | 81–76–53 | 80–76–36 |
| Durchtrocknung nach 24 h/RT | 0 | 0 | 0 | 0 | 0 |
| Pendelhärte n. 24/48/72 h 35–40 µm [s] | 38/43,5/50 | 34/47,5/54 | 34/51/61 | 19/29/37 | 31/49,5/68 |

|  | a | b | c | d | Beispiel 2 |
|---|---|---|---|---|---|
| Weissgrad Anfang/nach 17 h/130°C | 79,3–22,3 | 81,0–27,6 | 81,2–38,6 | 82,3–32,5 | 82,0–35,5 |
| nach 5 Tagen/50°C | 62,7 | 71,3 | 69,9 | 66,4 | 69,5 |
| Elastizität nach 1 Woche/70°C [mm] | 8,2 | 8,2 | 8,7 | >10 | 8,8 |
| Visk. [s]; Verdünnung [% H₂O] | 44/14,07 | 44/13,57 | n. m/30 | 44/11,15 | 43 13,04 |

Abkürzungen: SZ  = Säurezahl
Lff  = Lieferform
TEA  = Triethylamin
LF  = Luftfeuchtigkeit
RT  = Raumtemperatur
n. m  = nicht messbar
Visk.  = Viskosität

Da in der Beurteilung von Überzügen eine einzelne Eigenschaft häufig nicht alleine betrachtet werden kann, wertet die folgende Tabelle die Unterschiede zu erfindungsgemässen Lacksystemen:

O = gleichwertig mit dem erfindungsgemässen System

+ = besser als das erfindungsgemässe System

− = schlechter als das erfindungsgemässe System

|  | a | b | c | d | Beispiel 2 |
|---|---|---|---|---|---|
| Trocknungsverhalten | 0 | 0 | 0 | 0 | 0 |
| Härte | − | − | 0 | − | 0 |
| Glanz | 0 | 0 | 0 | 0 | 0 |
| Glanzhaltung 5 Tage/50°C | + | 0 | − | 0 | 0 |
| 17 h/130°C | + | + | − | + | 0 |
| Weisston | − | 0 | 0 | 0 | 0 |
| Weisstonhaltung 5 Tage/50°C | − | + | 0 | − | 0 |
| 17 h/130°C | − | − | + | − | 0 |
| Wasserfestigkeit | + | − | − | − | 0 |
| Wasserverdünnbarkeit | 0 | − | − | (+) | 0 |
| Lagerstabilität der Lff. nach 1 Monat RT-Lagerung | 0 | − | − | 0 | 0 |

## Patentansprüche

1. Wasserlösliche, lufttrocknende, Amin-neutralisierte Alkydharze mit Fettsäuregehalten von 20–60% aus Dicarbonsäuren bzw. deren esterbildenden Derivaten, mehrwertigen Alkoholen, Fettsäuren, Halbester-bildenden Dicarbonsäureanhydriden, gegebenenfalls Monocarbonsäuren und/oder einwertigen Alkoholen, dadurch gekennzeichnet, dass die Fettsäuren zu 10–80 Gew.-% aus Fettsäuren mit konjugierten Doppelbindungen bestehen und das Halbester-bildende Dicarbonsäureanhydrid Hexahydrophthalsäureanhydrid ist.

2. Alkydharze nach Anspruch 1, dadurch gekennzeichnet, dass die Fettsäuren zu 25–40 Gew.-% aus Fettsäuren mit konjugierten Doppelbindungen bestehen.

3. Alkydharze nach Ansprüchen 1 und 2, dadurch gekennzeichnet, dass die Dicarbonsäuren bzw. ihre esterbildenden Derivate Isophthalsäure oder Phthalsäureanhydrid sind.

4. Alkydharze nach Ansprüchen 1–3, dadurch gekennzeichnet, dass der mehrwertige Alkohol Pentaerythrit ist.

5. Alkydharze nach Ansprüchen 1–4, dadurch gekennzeichnet, dass die Fettsäure mit konjugierten Doppelbindungen konjugierte Sojaölfettsäure mit 29–33 Gew.-% Ölsäure, 46–55 Gew.-% Linolsäuren und 8–12 Gew.-% Linolensäuren ist, wobei Linol- und Linolensäuren zu 42–48% konjugiert sind.

6. Alkydharze nach Ansprüchen 1–5, dadurch gekennzeichnet, dass sie Fettsäuregehalte von 32–38% besitzen.

7. Alkydharze nach Ansprüchen 1–6, dadurch gekennzeichnet, dass sie einen Gehalt einkondensierter Benzoesäuren von 10–14 Gew.-% besitzen.

8. Alkydharze nach Ansprüchen 1–7, dadurch gekennzeichnet, dass sie als nicht-neutralisierte Halbester Säurezahlen von 38–44 und Hydroxylzahlen von 70–100 besitzen.

9. Verfahren zur Herstellung der Alkydharze nach Ansprüchen 1–8, dadurch gekennzeichnet, dass man ein Alkydharz aus Dicarbonsäuren bzw. ihren esterbildenden Derivaten, mehrwertigen Alkoholen und Fettsäuren, wobei die Fettsäuren 10–80 Gew.-% Fettsäuren mit konjugierten Doppelbindungen enthalten, mit Säurezahlen von unter 20 und Hydroxylzahlen von 50 bis 250 mit Hexahydrophthalsäureanhydrid bei erhöhter Temperatur, vorzugsweise bei 100–160 °C, bis zum Erreichen einer Säurezahl von 30–70 umsetzt, den erhaltenen Halbester gegebenenfalls in einem Lösungsvermittler vorlöst und mit Ammoniak oder Aminen mindestens teilweise neutralisiert.

10. Verwendung der Alkydharze nach Ansprüchen 1–8 als Grundlage für wässrige vergilbungsarme Lacke.

### Claims

1. Water-soluble, air drying, amine-neutralised alkyd resins having fatty acid contents of from 20 to 60%, obtained from dicarboxylic acids or their ester forming derivatives, polyhydric alcohols, fatty acids, semiester-forming dicarboxylic acid anhydrides, optionally monocarboxylic acids and/or monohydric alcohols, characterised in that from 10 to 80% by weight of the fatty acids are fatty acids with conjugated double bonds and the semiester-forming dicarboxylic acid anhydride is hexahydrophthalic acid anhydride.

2. Alkyd resins according to claim 1, characterised in that from 25 to 40% by weight of the fatty acids consist of fatty acids with conjugated double bonds.

3. Alkyd resins according to claims 1 and 2, characterised in that the dicarboxylic acids or their ester forming derivatives are isophthalic acid or phthalic acid anhydride.

4. Alkyd resins according to claims 1 to 3, characterised in that the polyhydric alcohol is pentaerythritol.

5. Alkyd resins according to claims 1 to 4, characterised in that the fatty acid with conjugated double bonds is conjugated soya oil fatty acid containing from 29 to 33% by weight of oleic acid, from 46 to 55% by weight of linoleic acids and from 8 to 12% by weight of linolenic acids, from 42 to 48% of the linoleic and linolenic acids being conjugated.

6. Alkyd resins according to claims 1 to 5, characterised in that they have fatty acid contents of from 32 to 38%.

7. Alkyd resins according to claims 1 to 6, characterised in that they contain from 10 to 14% by weight of condensed benzoic acid.

8. Alkyd resins according to claims 1 to 7, characterised in that, as unneutralised semiesters, they have acid numbers of from 38 to 44 and hydroxyl numbers of from 70 to 100.

9. A process for the preparation of the alkyd resins according to claims 1 to 8, characterised in that an alkyd resin having acid numbers below 20 and hydroxyl numbers from 50 to 250, obtained from dicarboxylic acids or their ester forming derivatives, polyhydric alcohols and fatty acids, from 10 to 80% by weight of which fatty acids have conjugated double bonds, is reacted with hexahydrophthalic acid anhydride at elevated temperature, preferably at 100 to 160 °C, until an acid number of from 30 to 70 is reached, and the resulting semiester is optionally predissolved in a solubilizing agent and is at least partially neutralised with ammonia or amines.

10. The use of the alkyd resins according to claims 1 to 8 as a basis for aqueous, virtually non-yellowing lacquers.

### Revendications

1. Résines alkydes neutralisées par des amines, solubles dans l'eau, séchant à l'air, à des teneurs en acides gras de 20 à 60%, d'acides dicarboxyliques ou leurs dérivés capables de former des esters, d'alcools polyvalents, d'acides gras, d'anhydrides dicarboxyliques formant des demiesters, le cas échéant d'acide monocarboxyliques et/ou d'alcools monovalents, caractérisées en ce que les acides gras consistent pour 10 à 80% en poids en acides gras à doubles liaisons conjuguées et en ce que l'anhydride dicarboxylique formant l'émiester est l'anhydride hexahydrophtalique.

2. Résines alkydes selon la revendication 1, caractérisées en ce que les acides gras consistent pour 25 à 40% en poids en acides gras à doubles liaisons conjuguées.

3. Résines alkydes selon les revendications 1 et 2, caractérisées en ce que les acides dicarboxyliques ou leurs dérivés capables de former des esters sont l'acide isophtalique ou l'anhydride phtalique.

4. Résines alkydes selon les revendications 1 à 3, caractérisées en ce que l'alcool polyvalent est le pentaérythritol.

5. Résines alkydes selon les revendications 1 à 4, caractérisées en ce que les acides gras à doubles liaisons conjuguées sont des acides gras de soja conjugués contenant 29 à 33% en poids d'acide oléique, 46 à 55% en poids d'acides linoléiques et 8 à 12% en poids d'acides linoléniques, les acides linoléiques et linoléniques étant conjugués en proportions de 42 à 48%.

6. Résines alkydes selon les revendications 1 à 5, caractérisées en ce qu'elles ont une teneur en acides gras de 32 à 38%.

7. Résines alkydes selon les revendications 1 à 6, caractérisées en ce qu'elles contiennent de 10 à 14% en poids d'acides benzoïques condensés.

8. Résines alkydes selon les revendications 1 à 7, caractérisées en ce que, à l'état d'hémiester non neutralisé, elles ont des indices d'acide de 38 à 44 et des indices d'hydroxyle de 70 à 100.

9. Procédé de préparation des résines alkydes selon les revendications 1 à 8, caractérisé en ce que l'on fait réagir une résine alkyde d'acides dicarboxyliques ou leurs dérivés capables de former des esters, d'alcools polyvalents et d'acides gras, les acides gras contenant de 10 à 80% en poids d'acides gras à doubles liaisons conjuguées,

avec des indices d'acide inférieurs à 20 et des indices d'hydroxyle de 50 à 250, avec l'anhydride hexahydrophtalique à chaud, de préférence à une température de 100 à 160°C, jusqu'à ce qu'on atteigne un indice d'acide de 30 à 70, on dissout le cas échéant l'hémiester obtenu dans un tiers-solvant et on neutralise en partie au moins par l'ammoniac ou des amines.

10. Utilisation des résine alkydes selon les revendications 1 à 8 en tant que bases pour des peintures et vernis aqueux jaunissant peu.